# EUROPEAN PATENT APPLICATION

(11) **EP 3 508 821 A1**
(43) Date of publication of application: **10.07.2019**
(21) Application number: 19150470.3
(22) Date of filing: 07.01.2019
(51) Int. Cl.: G01C 21/26, B60K 37/02, B62J 99/00, G01C 21/36, G06F 3/048

(54) **METER INTEGRATION SYSTEM**

(30) Priority: 08.01.2018 TW 10700630
(71) Applicant: AEON MOTOR Co., Ltd., 743 Tainan City (TW)
(72) Inventor: LIN, Tong-Min, 743 Tainan City (TW)
(74) Representative: Viering, Jentschura & Partner mbB Patent- und Rechtsanwälte

(57) **Abstract**

A meter integration system, applied to a motorcycle/scooter, has a processing unit (2), a memory unit (3), a vehicular data receiving unit (5), a wireless communication unit (7) and a digital dashboard (1). An instrument display area (10) of the digital dashboard (1) displays a general mode user interface (100) and a navigation mode user interface (200) which are mutually switchable. An indicator area (11) is beside the instrument display area (10). The vehicular data receiving unit (5) obtains vehicular information of the motorcycle/scooter and vehicular information of the motorcycle/scooter shown in the general mode user interface (100) and the indicator area (11). The wireless communication unit (7) obtains navigation data and satellite positioning coordinates provided by wireless communication devices such as smart phones (9), or the navigation data and satellite positioning coordinates is obtained through a satellite positioning unit (6) to provide navigation functions.

## Description

### BACKGROUND

### 1. Field of the Invention

The present invention relates to a meter system, especially to a meter integration system.

### 2. Description of Related Arts

A conventional motorcycle/scooter dashboard is of a mechanical type for showing basic vehicular information generated by various instruments when the motorcycle/scooter is in motion, for example, a left turn indicator, a right turn indicator, a fuel gauge, a high beam indicator, an engine tachometer, an odometer and a speedometer. Known electric motorcycles/scooters have display type dashboards that show vehicular information with electronic display panels. However, regardless of traditional mechanical type dashboards or current display type dashboards, the dashboards do not have navigation functions.

With the advancement of technology, navigation systems have been widely used in automobiles. Since current motorcycles/scooters do not have built-in navigation functions, when in need of navigation functions to reach a destination, a motorcycle/scooter driver will likely to use smart phones to provide navigation functions. However, since a motorcycle/scooter driver usually cannot operate a smart phone while riding a motorcycle/scooter, he/she might need to add a fixture on the front of the motorcycle/scooter to firmly fix wireless communication devices such as smart phones so that the driver may utilize, for example, the smart phones to provide navigation functions.

Even if mounting a fixture on the front of the motorcycle/scooter to fix a smart phone can help to utilize the smart phone to provide navigation functions, yet the information provided by the smart phone's navigation functions and the vehicular data showed on the motorcycle/scooter's dashboard are not correlated, thus there are still inconveniences in the usage and operation thereof.

### SUMMARY OF THE DISCLOSURE

An objective of the present invention is to provide a meter integration system that solves the problems of the current dashboard systems which only provide the basic vehicular information of the motorcycle/scooter and lack integrated navigation functions.

In order to achieve the objective of the present invention, the meter integration system of the present invention is used in a motorcycle/scooter.

For brevity, "motorcycle" will be used to represent "motorcycle" or "scooter" hereinafter.

The meter integration system includes:
a processing unit that includes functions of computation, processing, and control;
a memory unit electrically connected to the processing unit for storage of software and digital data;
a vehicular data receiving unit electrically connected to the processing unit for obtaining vehicular information of the motorcycle;
a wireless communication unit electrically connected to the processing unit, wherein the processing unit exchanges digital data through the wireless communication unit with a wireless communication device capable of providing navigation data and satellite positioning coordinates; and
a full-color digital dashboard electrically connected to the processing unit, wherein the digital dashboard includes:
   an instrument display area having a general mode user interface, a navigation mode user interface, and at least one operable function menu, wherein the aforesaid interfaces are mutually switchable;
   an indicator area beside the instrument display area, the indicator area having a left turn indicator, a right turn indicator, an energy inventory indicator, and a high beam indicator; and
   at least one instrument operating button for switching between the aforesaid user interfaces, as well as for setting and selecting in the instrument display area, so that the processing unit can show the vehicular information obtained by the vehicular data receiving unit from the motorcycle under the general mode user interface in the instrument display area, and further, the processing unit can show satellite positioning coordinates of the current location and the navigation data provided by the wireless communication device under the navigation mode user interface in the instrument display area.

The forgoing meter integration system utilizes integration type system construction. The instrument display area of the digital dashboard displays includes a general mode user interface and a navigation mode user interface which are mutually switchable, and the general mode user interface utilizes the vehicular information of the motorcycle obtained by a vehicular data receiving unit to show general vehicular information in the instrument display area and an indicator area. The navigation mode user interface utilizes the navigation data and the satellite positioning coordinates of the current location obtained by the wireless communication unit through a smart phone or other wireless communication devices to show navigation related information, such that the meter integration system can provide vehicular information and navigation functions.

The meter integration system of the present invention further utilizes the full color dynamic graphic images and color changing functions of the digital dashboard, such that the general mode user interface and the navigation mode user interface can have dynamic color changing effects in the instrument display area of the digital dashboard, and at the same time, color changing or flashing can be used to alert the motorcycle driver.

The meter integration system of the present invention further utilizes the wireless communication unit to obtain the navigation data and the satellite positioning coordinates of the current location through smart phones or other wireless communication devices. While the motorcycle is in motion, the general mode user interface and the navigation mode user interface in the instrument display area of the digital dashboard may use a speed limit graph image to show the speed limit of the current location and use a speed camera alert graph image to remind the motorcycle driver of speed cameras ahead of the road.

The meter integration system of the present invention further utilizes the wireless communication unit to receive the incoming messages from the smart phone and other wireless communication devices to indicate an incoming call with a call reminder graph image under the general mode user interface or the navigation mode user interface in the instrument display area of the digital dashboard. However, concerning traffic safety, the meter integration system does not provide call answering and related control functions.

The meter integration system of the present invention further includes a satellite positioning unit. The satellite positioning unit is electrically connected to a processing unit such that the meter integration system may utilize the satellite positioning unit to obtain the satellite positioning coordinates of the current location.

The meter integration system of the present invention further includes a voice unit electrically connected to the processing unit, and the voice unit can be controlled by the processing unit to prompt voices and alerting sounds.

The meter integration system of the present invention further provides a function for the motorcycle driver to use the built-in APP (Application Program) of the smart phone or other wireless communication devices carried by the driver him/herself to find the parking location of the motorcycle, wherein the motorcycle driver may use the smart phone to remote control the motorcycle's power switch to switch from an off state to an on state, so that the smart phone and the meter integration system of the motorcycle can be wirelessly connected, and then the smart phone can acquire the satellite positioning coordinates of the motorcycle's current location through the satellite positioning unit. By comparing the satellite positioning coordinates between the smart phone's own current location and the motorcycle's current location, the smart phone can show the location of and the distance from the motorcycle. Thus, the function of locating the motorcycle is provided by the meter integration system.

The meter integration system of the present invention further provides an accident detection unit. The accident detection unit is electrically connected to the processing unit and includes a tumbling detection unit. The accident detection unit is combined with the processing unit to detect whether the motorcycle is tumbled or the like. When the accident detecting unit detects that the motorcycle is tumbled, the accident detecting unit sends a signal to the processing unit, and thereafter, the processing unit sends out an accident signal through the wireless communication unit.

### IN THE DRAWINGS

FIG. 1 is a block diagram showing one embodiment of the meter integration system of the present invention;
FIG. 2 is a schematic diagram of the meter integration system of the present invention for wireless data signal exchange between a smart phone and a wireless communication unit controlled by a processing unit;
FIG. 3 is a plan view showing the digital dashboard in the meter integration system of the present invention switching to a general mode user interface;
FIG. 4 is a plan view showing the digital dashboard in the meter integration system of the present invention switching to a navigation mode user interface;
FIG. 5 is a plan view of the general mode user interface of the digital dashboard in the meter integration system of the present invention showing the location of a motorcycle when it is stopped;
FIG. 6 is a block diagram showing another embodiment of the meter integration system of the present invention; and
FIG. 7 is a block diagram showing the meter integration system of FIG. 6 added with an accident detecting unit

### DETAILED DESCRIPTION OF THE DISCLOSURE

Hereinafter, one skilled in the art can easily realize the advantages and effects of the instant disclosure from the following examples. Therefore, it should be understood that the descriptions proposed herein are just preferable examples for the purpose of illustrations only, not intended to limit the scope of the disclosure.

These and other aspects of the embodiments herein will be better appreciated and understood when considered in conjunction with the following description and the accompanying drawings.

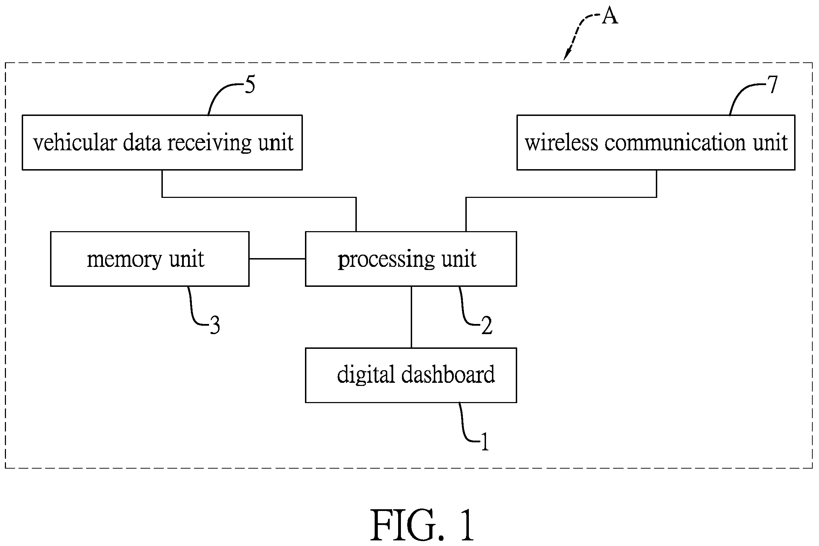

As shown in FIG. 1, an embodiment of a meter integration system is disclosed. The meter integration system is applied to a motorcycle. The motorcycle may be an ICE (Internal Combustion Engine) motorcycle or an electric motorcycle. The meter integration system A, includes a processing unit 2 which comprises at least a micro-controller chip or the like, a memory unit 3 which comprises at least a semiconductor memory chip such as DRAM, SRAM, FLASH or the like, a vehicular data receiving unit 5 which comprises at least a micro-controller chip or an ASIC (Application Specific Integrated Circuit) or the like, a wireless communication unit 7, and a digital dashboard 1, wherein the processing unit 2 is electrically connected to the memory unit 3, the vehicular data receiving unit 5, the wireless communication unit 7, and the digital dashboard 1.

As shown in FIG. 1, the processing unit 2 includes functions such as computation, processing, and control.

As shown in FIG. 1, the memory unit 3 is used to store software programs and digital data, so that the processing unit 2 can perform various application functions and data processing based on the software and data stored in the memory unit 3.

As shown in FIG. 1, the vehicular data receiving unit 5 is configured to obtain vehicular information of the motorcycle. The vehicular information includes a left turn indicator, a right turn indicator, a fuel inventory or an electric energy inventory, a high beam, a vehicle speed, RPM (Round Per Minute) of a dynamics force device (e.g. an engine or a motor), and mileage, etc. The obtained vehicular information is transmitted to the processing unit 2 to perform various application functions and data processing.

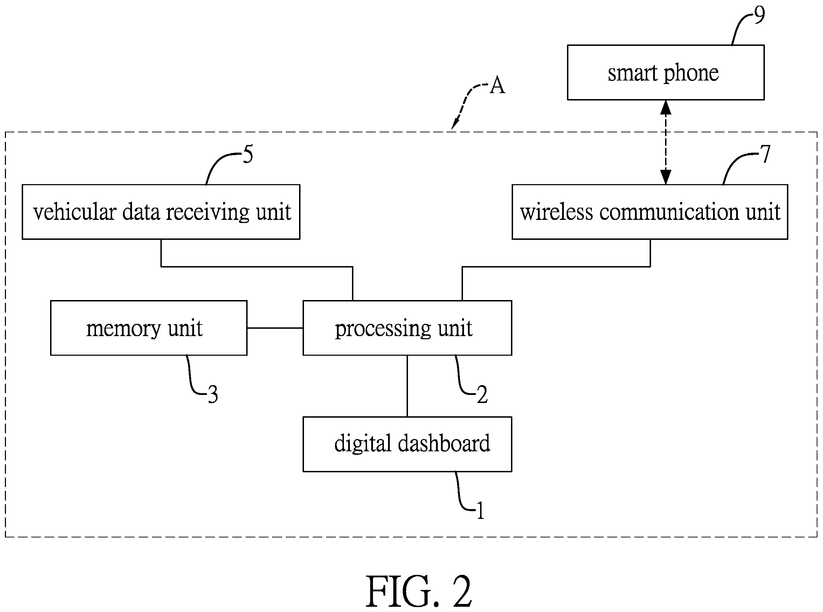

As shown in FIG. 1 and FIG. 2, the wireless communication unit 7, controlled by the processing unit 2, is equipped with wireless communication means which is used in transmitting and receiving digital data to/from wireless communication devices such as smart phones 9. The digital data just mentioned is provided by the wireless communication device such as a smart phone and includes at least navigation related data and the satellite positioning coordinates of the current location. The above wireless signal transmission means may be short-range wireless signal transmission means, such as Bluetooth (BT) or Near-Field Communication (NFC), or the above wireless signal transmission means may be a long-range wireless signal transmission means. The processing unit 2 can exchange the above-mentioned digital data with wireless communication devices such as smart phones 9, and thus the processing unit 2 can perform navigation, satellite positioning, related data processing, and other related application functions.

As shown in FIGS. 1, 3, and 4, the digital dashboard 1 is a full-color digital dashboard that has at least a dynamic full-color display function and a color conversion display function. The digital dashboard 1 is controlled by the processing unit 2. The digital dashboard 1 includes an instrument display area 10. The instrument display area 10 may switch user interfaces to show a general mode user interface 100 or a navigation mode user interface 200, and the instrument display area 10 further includes one or more operable function menus. The digital dashboard 1 is provided with an indicator area 11 on one side or on opposite sides of the instrument display area 10. The digital dashboard 1 has at least two instrument operating buttons 12, 13 which are used to operate user interface switching, function setting, and function selection in the instrument display area 10.

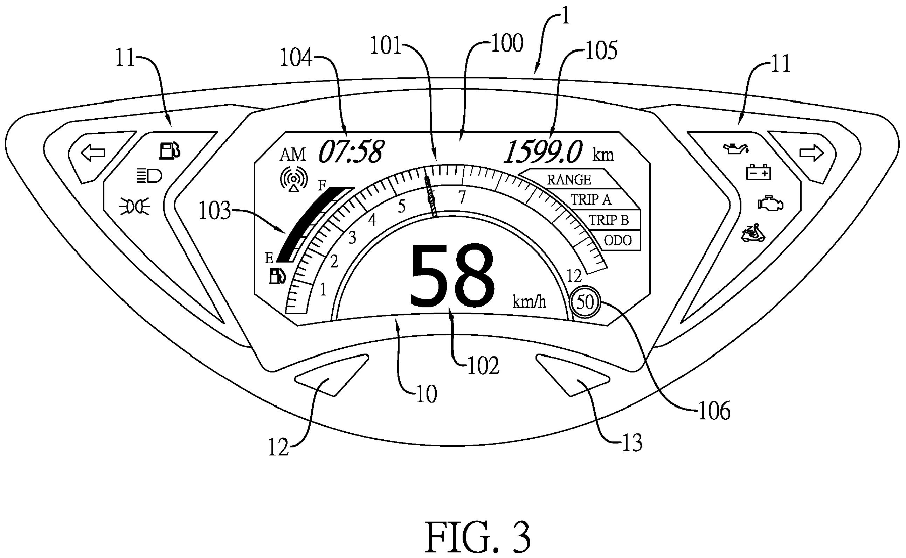

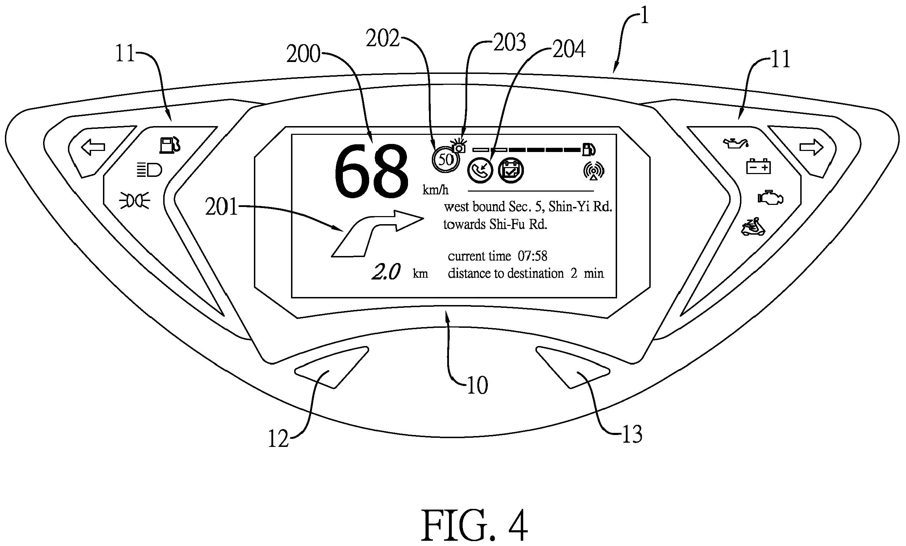

In this embodiment, as shown in FIG. 3 and FIG. 4, it is disclosed that the digital dashboard 1 has two instrument operating buttons 12, 13, which are respectively a function switching button and a selection button. The instrument operating buttons 12, 13 are used to control the user interface switching between the general mode user interface 100 and the navigation mode user interface 200, and to control the operation of the function menus of the user interfaces shown in the instrument display area 10, and to adjust the images and font sizes in the general mode user interface 100 and the navigation mode user interface 200.

When the digital dashboard 1 is a touch display device, the instrument operating buttons are graphic images in the touch display device. When the digital dashboard 1 is not a touch display device, the instrument operating buttons are physical buttons provided outside the instrument display area 10.

As shown in FIG. 3 and FIG. 4, the indicator area 11 of the digital dashboard 1 includes a left turn indicator, a right turn indicator, an energy inventory (e.g. fuel or battery) indicator, and the high-beam indicator or the like, and further includes a dynamic force device (e.g. an engine or a motor) status indicator or the like. The functions of the indicators in the aforementioned indicator area 11 are the same as those of the well-known indicators of the conventional motorcycles, and hence, the details thereof will be omitted.

As shown in FIG. 3, the general mode user interface 100 includes a tachometer graph image 101 that shows the output rotation speed of the dynamic force device of the motorcycle, a vehicle speed graph image 102 that shows the vehicle speed, an energy inventory graph image 103 that shows the energy inventory, and the like. It may further include a time graph image 104 showing time and a mileage graph image 105 showing the number of miles traveled by the motorcycle. The mileage graph image 105 may be switched to show the total mileage (ODO, odometer reading) or the short-distance mileage of the motorcycle (TRIP A, TRIP B) depending on the settings by the instrument operating buttons 12, 13 in the digital dashboard 1. It may further include a call reminder graph image 204 for notification of incoming calls. The tachometer graph image 101 and the vehicle speed graph image 102 under the general mode user interface 100 can also show dynamic color changes according to the speed of the vehicle. The changes of the colors and the flickering of the emitting light can help the motorcycle driver to pay more attention to the speed of the vehicle. Moreover, the general mode user interface 100 may further include a speed limit graph image 202 for notifying the motorcycle driver about the speed limit, and a speed camera alert graph image 203 for reminding the motorcycle driver of the speed cameras.

As shown in FIG. 4, the navigation mode user interface 200 includes a navigation graph image 201 for showing necessary navigation information for the driver to drive from a current location to a destination according to certain externally provided navigation data and a current location, for example: route directions, and estimated travelling time and distance. Moreover, a speed limit graph image 202, a speed camera alert graph image 203, and the like may be further included. It may also further include a call reminder graph image 204 for reminding the motorcycle driver of incoming calls.

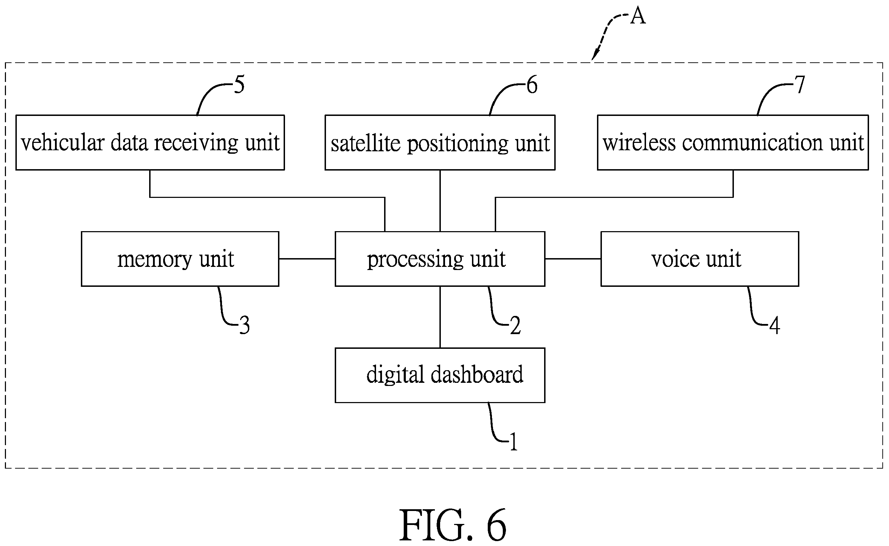

As shown in FIG. 6, the meter integration system A may further include a satellite positioning unit 6 electrically connected to the processing unit 2. As shown in FIG. 6, the satellite positioning unit 6 may be a GPS (Global Positioning System) and is used to obtain and to continuously update the satellite positioning coordinates of the current location. The satellite positioning coordinates are transmitted to the processing unit 2. The processing unit 2 then executes various geographical location related application functions and data processing.

As shown in FIG. 6, the meter integration system A may further include a voice unit 4 electrically connected to the processing unit 2, and the voice unit 4 can be controlled by the processing unit 2 to make specific voices and alert sounds.

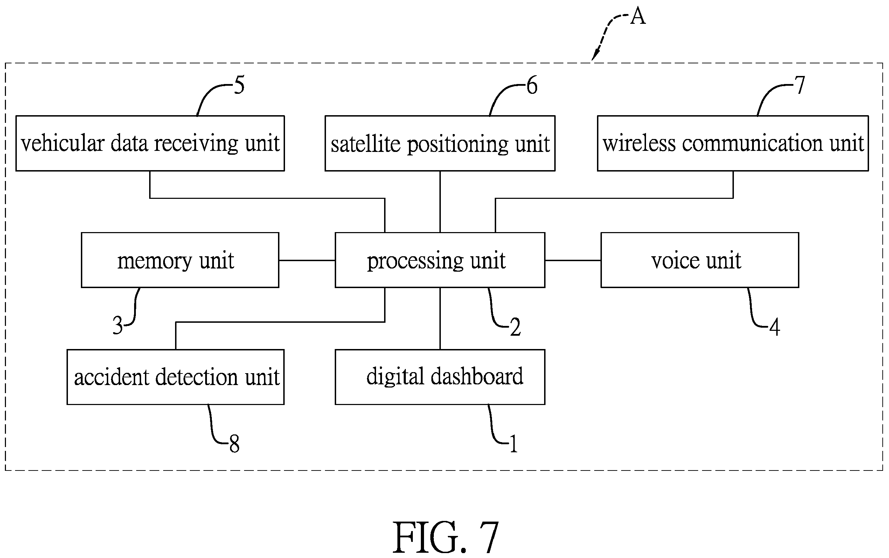

As shown in FIG. 7, the meter integration system A further includes an accident detection unit 8 electrically connected to the processing unit 2, and the accident detection unit 8 includes a tumble detection unit. The accident detection unit 8 and the processing unit 2 together detect whether the motorcycle is tumbled or the like. When the accident detection unit 8 detects that the motorcycle is tumbled, the accident detection unit 8 sends a signal to the processing unit 2. Then, the processing unit 2 obtains the satellite positioning coordinates of the current location from the smart mobile phone carried by the driver through the wireless communication unit 7, or the processing unit 2 may obtain the satellite positioning coordinates of the current location from the built-in satellite positioning unit 6 of the meter integration system A. Then, through the wireless communication unit 7, the processing unit 2 sends out accident signals which include at least the location where the accident happened. Then, the accident signals can incur a wireless communication device such as a smart phone 9 to send out short messages.

After the meter integration system A is applied to the motorcycle, as shown in FIG. 3, and once the motorcycle driver starts the motorcycle engine, the meter integration system A will be activated, and the instrument display area 10 of the digital dashboard 1 will show the general mode user interface 100. The processing unit 2 processes various kinds of related application function data based on the vehicular information such as left and right turning indicators, fuel or electric energy inventory, high beam, vehicle speed, RPM (Round Per Minute) of the dynamic force device, and mileage provided by the vehicular data receiving unit 5. The application function data will be processed, and corresponding information is showed in the general mode user interface 100, for example, displaying the RPM of the dynamic force device, the fuel or the electric energy inventory, and the mileage and other related vehicular information. While the motorcycle is in motion, the current vehicle speed is shown in the general mode user interface 100 in the instrument display area 10, and when the motorcycle driver switches on the left or right turn indicators, the corresponding lights in the indicator area 11 of the digital dashboard 1will flash.

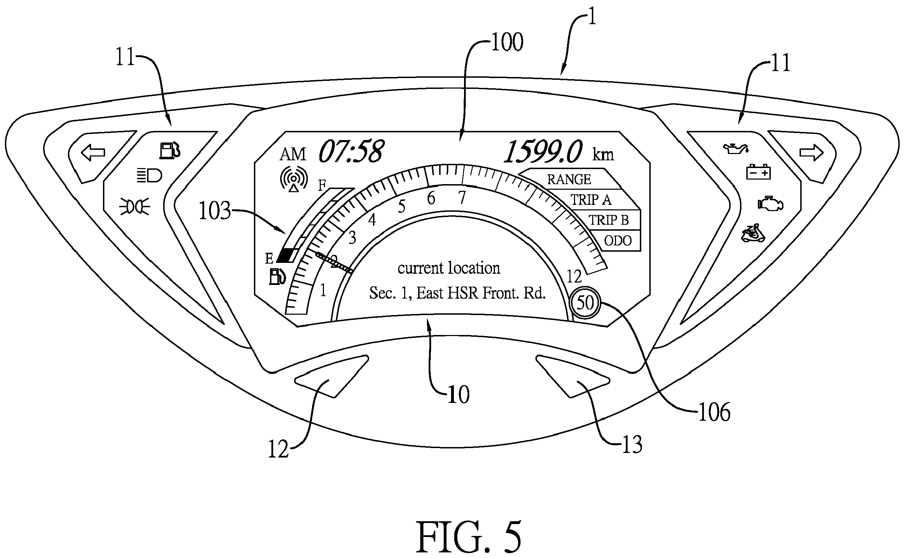

As shown in FIG. 5, during a motorcycle ride, if the motorcycle stops, and in case the digital dashboard 1 is with the general mode user interface 100, then the processing unit 2 via the wireless communication unit 7 will connect to the smart mobile phone carried by the driver to acquire the satellite positioning coordinates and map data of the current location. The current location will be shown in the instrument display area 10 of the general mode user interface 100.

As shown in FIG. 4, when the motorcycle driver intends to enter the navigation mode, the driver may operate the instrument operating buttons 12, 13 of the digital dashboard 1 to switch to the navigation mode user interface 200 in the instrument display area 10. To be more specific, firstly, the driver sets and completes the navigation data to the destination for the wireless communication device such as the smart phone 9, and then the driver operates the instrument operating buttons 12, 13 of the digital dashboard 1 so that the processing unit 2 through the wireless communication unit 7 may obtain the navigation related information from the wireless communication device such as the smart phone 9. And the navigation related information is recorded in the memory unit 3. When the motorcycle driver starts to operate the navigation function via the instrument operating buttons 12, 13 on the digital dashboard 1, the processing unit 2 can obtain the satellite positioning coordinates of the current location through the wireless communication unit 7 from the smart mobile phone carried by the driver; or the processing unit 2 may obtain the satellite positioning coordinates of the current location from the satellite positioning unit 6 (e.g. GPS). The processing unit 2 will integrate the obtained satellite positioning coordinates of the current location with the navigation-related data to start navigating. Driving directions, distances, and other relevant navigation data are shown under the navigation mode user interface 200 in the instrument display area 10, and the voice unit 4 will prompt voices or alerting sounds whenever appropriate and the speed limit of the current location will also be shown.

When the motorcycle is in motion, the processing unit 2 can continuously obtain the satellite positioning coordinates of the current location from the smart mobile phone carried by the driver through the wireless communication unit 7, or the satellite positioning unit 6 continuously obtains the satellite positioning of the current location. The processing unit 2 integrates the satellite positioning coordinates and navigation data of the current location, and let the voice unit 4 issue voice prompts at a predetermined distance away from and before the speed camera, and at the same time, the navigation mode user interface 200 in the instrument display area 10 is instructed to show the speed camera alert graph image 203 to caution the motorcycle driver.

The meter integration system A also provides a caller ID function, that is, when someone calls the motorcycle driver on his/her smart phone, the incoming call's information can be transmitted from the smart phone to the processing unit 2 through the wireless communication unit 7, and the processing unit 2 incurs the call reminder graph image 204 to be displayed in the instrument display area 10 of the digital dashboard 1, indicating that someone has called. However, concerning traffic safety, the meter integration system A does not provide call answering and related control functions. The motorcycle driver may call back after the motorcycle stops.

The meter integration system can also provide a function for a motorcycle driver to use a smart phone or other wireless communication devices' built-in application (APP) to find the parking location of the motorcycle. To be more specific, the motorcycle driver may use the smart phone to remote control the motorcycle's power switch to switch from an off state to an on state, so that the smart phone and the meter integration system A of the motorcycle can be wirelessly connected, and then the smart phone can acquire the satellite positioning coordinates of the motorcycle's current location by the satellite positioning unit 6. By comparing the satellite positioning coordinates between the smart phone's own current location and the motorcycle's current location, the smart phone can show the location of and the distance from the motorcycle.

The meter integration system A may also detect an accident such as tumbling of the motorcycle by the accident detection unit 8 in combination with the processing unit 2. When the accident detection unit 8 detects the tumbling of the motorcycle, the accident detection unit 8 sends a signal to the processing unit 2. Then the processing unit 2, through the wireless communication unit 7, obtains the satellite positioning coordinates of the current location from the smart mobile phone carried by the driver, or the processing unit 2 may obtain the satellite positioning coordinates of the current location from the satellite positioning unit 6 (e.g. GPS). Thereafter, the processing unit 2, through the wireless communication unit 7, sends out accident signals which include at least the location where the accident happened. Then, the smart phone of the motorcycle driver via the Short Messaging Service (SMS) function can send the accident signals that include the location where the accident happened to the preset emergency contact persons' wireless communications devices such as smart phones.

While the present invention has been described in terms of what are presently considered to be the most practical and preferred embodiments, it is to be understood that the present invention need not be restricted to the disclosed embodiment. On the contrary, it is intended to cover various modifications and similar arrangements included within the spirit and scope of the appended claims which are to be accorded with the broadest interpretation so as to encompass all such modifications and similar structures. Therefore, the above description and illustration should not be taken as limiting the scope of the present invention which is defined by the appended claims.

## Claims

1. A meter integration system applied to a motorcycle, **characterized in that** the meter integration system comprises:
a processing unit (2) that includes functions of computation, processing, and control;
a memory unit (3) electrically connected to the processing unit (2) for storage of software and digital data;
a vehicular data receiving unit (5) electrically connected to the processing unit (2) for obtaining vehicular information of the motorcycle;
a wireless communication unit (7) electrically connected to the processing unit (2), wherein the processing unit (2) exchanges digital data through the wireless communication unit (7) with a wireless communication device capable of providing navigation data and satellite positioning coordinates; and,
a full-color digital dashboard (1) electrically connected to the processing unit (2), wherein the digital dashboard (1) includes:
an instrument display area (10) including a general mode user interface (100), a navigation mode user interface (200), and at least one operable function menu, wherein the aforesaid interfaces are mutually switchable;
an indicator area (11) beside the instrument display area (10), the indicator area (11) including a left turn indicator, a right turn indicator, an energy inventory indicator, and a high beam indicator; and
at least one instrument operating button (12,13) for switching between the aforesaid user interfaces, as well as for setting and selecting in the instrument display area (10), so that the processing unit (2) can show the vehicular information obtained by the vehicular data receiving unit (5) from the motorcycle under the general mode user interface (100) in the instrument display area (10), and the processing unit (2) can show satellite positioning coordinates of the current location and the navigation data provided by the wireless communication device under the navigation mode user interface (200) in the instrument display area (10).

2. The meter integration system as claimed in claim 1, wherein the meter integration system further includes a satellite positioning unit (6) electrically connected to the processing unit (2), and the meter integration system obtains the satellite positioning coordinates of a current location through the satellite positioning unit (6).

3. The meter integration system as claimed in claim 1, wherein the meter integration system further includes a voice unit (4) electrically connected to the processing unit (2), and the voice unit (4) is controlled by the processing unit (2) to prompt voices and alerting sounds.

4. The meter integration system as claimed in claim 1, wherein the meter integration system further includes a satellite positioning unit (6) and a voice unit (4) respectively electrically connected to the processing unit (2), the meter integration system obtains the satellite positioning coordinates of a current location through the satellite positioning unit (6), and the voice unit (4) is controlled by the processing unit (2) to prompt voices and alerting sounds.

5. The meter integration system as claimed in claim 1, wherein the meter integration system further includes an accident detection unit (8) electrically connected to the processing unit (2), the accident detection unit (8) includes a tumble detection unit, and the accident detection unit (8) is combined with the processing unit (2) to detect whether the motorcycle is tumbled, when the accident detecting unit detects that the motorcycle is tumbled, the accident detecting unit sends a signal to the processing unit (2), and thereafter, the processing unit (2) sends out an accident signal through the wireless communication unit (7).

6. The meter integration system as claimed in claim 2 or 4, wherein the meter integration system further includes an accident detection unit (8) electrically connected to the processing unit (2), the accident detection unit (8) includes a tumble detection unit, and the accident detection unit (8) is combined with the processing unit (2) to detect whether the motorcycle is tumbled, when the accident detecting unit detects that the motorcycle is tumbled, the accident detecting unit sends a signal to the processing unit (2), and thereafter, the processing unit (2) sends out an accident signal through the wireless communication unit (7).

7. The meter integration system as claimed in claims 2,3,4, or 5, wherein the at least one instrument operating button (12,13) comprises two instrument operating buttons (12,13), which are a function switching button and a selection button respectively, the function switching button for controlling the switching between the general mode user interface (100) and the navigation mode user interface (200), and the selection button for controlling function setting and function selection of the at least one operable function menu in the instrument display area (10).

8. The meter integration system as claimed in claim 1, wherein the at least one instrument operating button (12,13) comprises two instrument operating buttons (12,13), which are a function switching button and a selection button respectively, the function switching button for controlling the switching between the general mode user interface (100) and the navigation mode user interface (200), and the selection button for controlling function setting and function selection of the at least one operable function menu in the instrument display area (10).

9. The meter integration system as claimed in claim 7, wherein the digital dashboard (1) is a touch display device, and the instrument operating buttons (12,13) are graphic images displayed by the touch display device.

10. The meter integration system as claimed in claim 7, wherein the instrument operating buttons (12, 13) are physical buttons beside the instrument display area (10).

11. The meter integration system as claimed in claim 7, wherein the general mode user interface (100) further includes a tachometer graph image (101), a vehicle speed graph image (102), and an energy inventory graph image (103), wherein colors of the tachometer graph image (101) and the vehicle speed graph image (102) are dynamically changed according to the vehicle speed.

12. The meter integration system as claimed in claim 8, wherein the digital dashboard (1) is a touch display device, and the instrument operating buttons (12, 13) are graphic images displayed by the touch display device.

13. The meter integration system as claimed in claim 8, wherein the instrument operating buttons (12, 13) are physical buttons beside the instrument display area (10).

14. The meter integration system as claimed in claim 8, wherein the general mode user interface (100) further includes a tachometer graph image (101), a vehicle speed graph image (102), and an energy inventory graph image (103), wherein colors of the tachometer graph image (101) and the vehicle speed graph image (102) are dynamically changed according to the vehicle speed.

15. The meter integration system as claimed in claim 14, wherein the general mode user interface (100) and the navigation mode user interface (200) each further include a call reminder graph image (204), a speed limit graph image (202), and a speed camera alert graph image (203).
